# EUROPEAN PATENT SPECIFICATION

(11) **EP 2 190 708 B1**
(45) Date of publication and mention of the grant of the patent: **12.06.2013**
(21) Application number: 08782961.0
(22) Date of filing: 21.08.2008
(51) Int. Cl.: B60W 10/06, B60T 7/12, B60W 10/18, B60K 26/02, B60T 7/14, G05F 1/30, B60T 7/04, B60W 10/04, B60T 8/32

(54) **ACCELERATOR BRAKING MODULE**
FAHRPEDALBREMSMODUL
MODULE DE FREINAGE D'ACCÉLÉRATEUR

(30) Priority: 21.08.2007 AU 2007904505 P; 31.10.2007 AU 2007231765
(43) Date of publication of application: 02.06.2010
(73) Proprietor: Olofsson, Erland George, North Rocks, NSW 2151 (AU)
(72) Inventor: Olofsson, Erland George, North Rocks, NSW 2151 (AU)
(74) Representative: Moore, Barry
(86) International application number: PCT/AU2008/001213
(87) International publication number: WO 2009/023916

(56) References cited:
- AU-A1- 2004 201 225
- DE-A1- 19 909 326
- JP-A- 2001 260 713
- US-A- 3 726 369
- US-A- 4 491 840
- US-A- 5 810 107
- US-B2- 6 554 744

## Description

The present invention relates to control systems for motor vehicles and, more particularly to the interaction of acceleration and braking of a vehicle and even more particularly to a modular electronic device for implementing same.

### BACKGROUND

It is well known that the distance required to bring a moving vehicle to a standstill from the instant a driver perceives a potentially hazardous situation to the vehicle coming to rest, is a combination of the reaction distance and the braking distance.

The reaction distance is that distance covered during the delay between which the mind of the driver perceives the situation and decides to act, to the actual activating of the vehicles braking system. The braking distance is that distance actually required to bring the vehicle to a standstill from the speed at which it was travelling under the application of the optimum braking force.

Both the reaction distance and the braking distance are clearly functions of the initial speed of the vehicle, while the braking distance is additionally affected by road and weather conditions as well as the efficiency of the braking system.

Improvements in braking systems have significantly reduced the braking distance in emergency situations, while the reaction distance has tended to remain relatively stable. A disadvantage in conventional vehicle control systems in an emergency situation is that the reaction distance is partly made up of the time taken to physically lift the driver's foot from the accelerator pedal, transfer it to the brake pedal and depress that pedal. An example of one such device is US 4,491,840 to Nishikawa et al which discloses an intervehicle distance control system that measures the distance from a preceding vehicle and is coupled to a braking system in order to effect the braking operation in an emergency.

Conventional control systems also are inconvenient in non-emergency braking situations. For example in "stop start" traffic situations, the need to repeatedly transfer the driver's foot from one pedal to the other can become very tiring.

The applicant's earlier filed International Patent Application number PCT/AU01/00582 and prior art US Patent 3082851 to Sheriff disclose substantially mechanical arrangements. However such arrangements are prone to failure and are difficult to calibrate. They can also be difficult to retrofit. They can also be difficult to customise "on the fly" to suit the preferences of the individual driver.

Braking devices according to the preamble of claim 1 that respond to the position or movement of the accelerator pedal are known, for example, DE 199 09 326 to Lucas Ind Plc.

It is an object of the present invention to address or ameliorate some of the above disadvantages.

### Notes

1. The term "comprising" (and grammatical variations thereof) is used in this specification in the inclusive sense of "having" or "including", and not in the exclusive sense of "consisting only of".
2. The above discussion of the prior art in the Background of the invention, is not an admission that any information discussed therein is citable prior art or part of the common general knowledge of persons skilled in the art in any country.

### DEFINITIONS

In this specification the following terms are to have the meanings as defined here:
"Secondary reaction surface" means a surface interposed between at least a portion of the accelerator pedal of a vehicle and another surface against which it reacts. In one instance the surface against which the secondary reaction surface reacts may be that of a foot applied to the accelerator pedal. In other instances other surfaces can be utilised.

### BRIEF DESCRIPTION OF INVENTION

The present teaching provides a braking system as detailed in claim 1. Advantageous features are provided in dependent claims.

### BRIEF DESCRIPTION OF DRAWINGS

Embodiments of the present invention will now be described with reference to the accompanying drawings wherein:

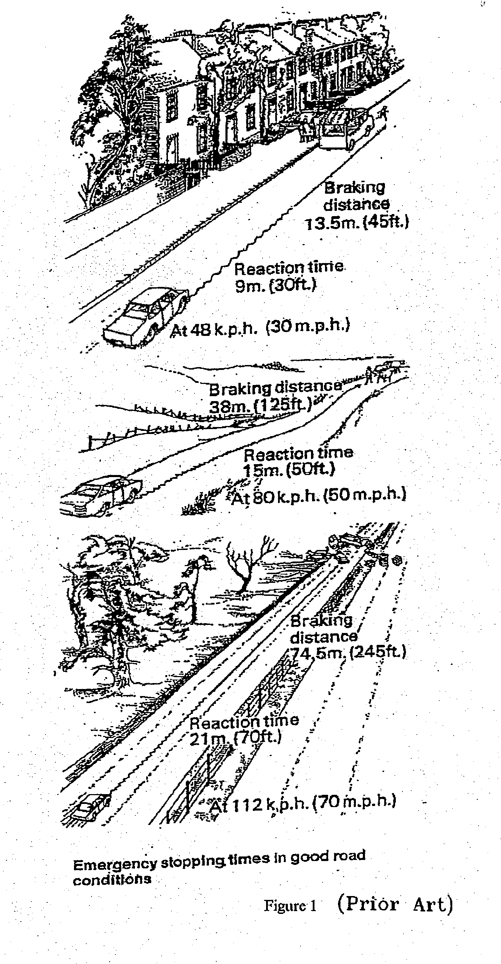

Figure 1 (Prior Art) is an illustration of the two components, reaction distance and braking distance at various speeds which determine the overall distance required to bring a vehicle to a standstill from a first perceived need by a driver to do so,
Figure 2 comprises prior art disclosure from applicant's earlier filed International Patent Application no PCT/AU01/00582 illustrating preferred braking characteristics to be imparted as part of accelerator pedal operation;
Figure 3 is a general schematic of the accelerator and brake pedal controls of a vehicle fitted with the accelerator brake system of the present invention,
Figure 4 is a schematic of a secondary reactive surface attached to an accelerator pedal according to a first preferred embodiment of the accelerator brake system of the invention,
Fig 5A is a schematic of a secondary reactive surface attached to an accelerator pedal according to a third preferred embodiment of the accelerator break system of the invention and
Fig 5B is a schematic of a secondary reactive surface attached to an accelerator pedal according to a fourth preferred embodiment of the accelerator break system of the invention
Figure 6 is a brake pedal module, in accordance with a first preferred embodiment of the present invention,
Figure 7 is a graph representing the interaction of the accelerator pedal, brake pedal and braking force of the accelerator brake system of Figures 3 to 6.
Figure 8 is a lay out of an installation of at least a preferred embodiment of the present invention in the cabin of a vehicle.
Figure 9 is a block diagram of an electronic implementation of the modular arrangement of figure 8.
Figure 10 is a block diagram of a "factory fit" embodiment of the electronic implementation of the modular arrangement of Figure 8.

### DETAILED DESCRIPTION OF PREFERRED EMBODIMENTS

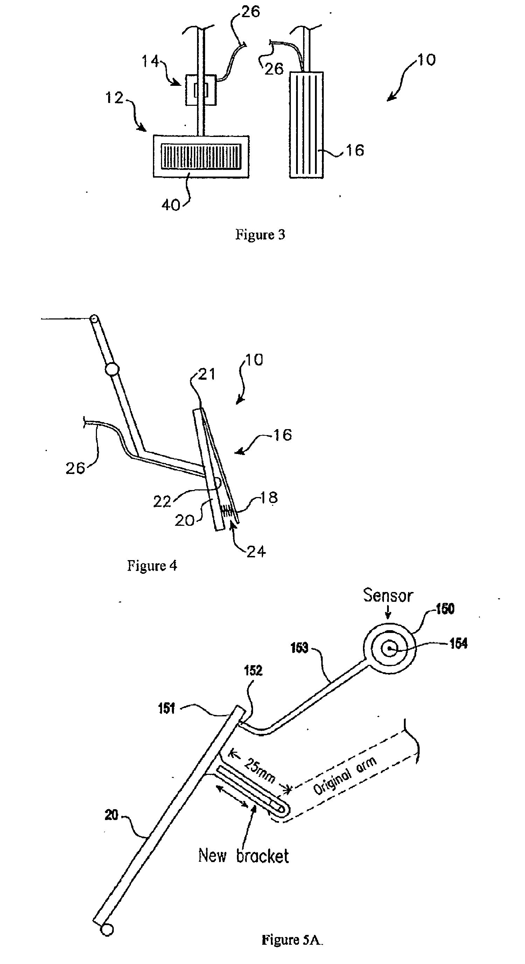

With reference to Figure 3, the controls of a typical motor vehicle include an accelerator pedal 10 and a brake pedal 12. Although a vehicle equipped with a manually operated gear train may be additionally equipped with a clutch pedal, the present invention is concerned only with the two pedals, accelerator pedal 10 and brake pedal 12.

In practise embodiments of the present invention are suited to conventional automatic transmission equipped vehicles which have only an accelerator pedal and a brake pedal and do not have a third clutch pedal to assist changing gears.

As also shown in Figure 3, the brake pedal 12 according to the invention, is provided with a control module 14, the function of which will be explained in more detail below. As best seen in Figures 3 and 4, the accelerator pedal 10 is provided with a secondary reaction surface 16.

Secondary reaction surface 16 in a first preferred embodiment shown in Figure 4, comprises an auxiliary pedal 18, attached to a standard accelerator pedal 20 by a hinge 21, and covers at least a portion of the accelerator pedal 20. In this instance, the auxiliary pedal 18 is arranged so it can be depressed against a spring 24 a certain amount relative to the surface 22 of accelerator pedal 20, without inducing movement in accelerator pedal 20. When pressure is applied by the foot of a driver (not shown) past this point, the pressure applied is transmitted to the accelerator pedal 20, causing it to depress and urge the vehicle into motion in the usual way.

Auxiliary pedal 18 is thus arranged to move between a first deactivated state shown in Figure 4, (when there is a maximum possible movement between the auxiliary pedal 18 and the surface 22 of pedal 20), and the fully activated state at the point where further application of pressure will induce movement in accelerator pedal 20. This movement between the deactivated state and the fully activated state is monitored by a sensor in this instance implemented in the form of a potentiometer 205A and relayed by lead 26 to control module 14 as force data.

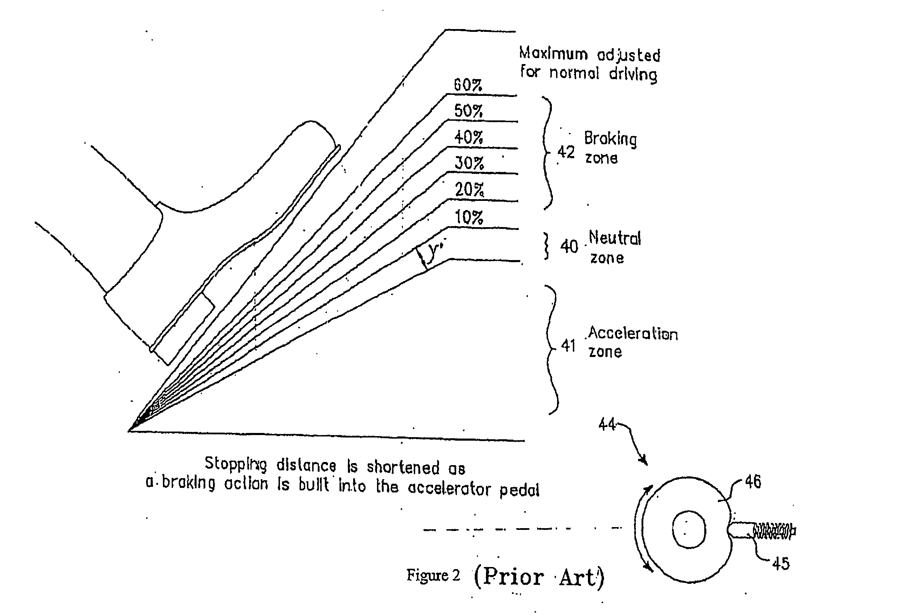

It will be understood, that in each of the embodiments, the pressure which needs to be applied either to the auxiliary pedal 18 to operate the system from a deactivated state to a fully activated state, must be less than the pressure required to depress the accelerator pedal. Preferably, the difference in pressures is such that there is a noticeable neutral feel zone perceptible to a driver. In a preferred form this is implemented by way of a mechanical detent (refer inset in figure 2). Also in a preferred form a switch is activated in this zone causing illumination of "coasting" light on the dashboard of the vehicle.

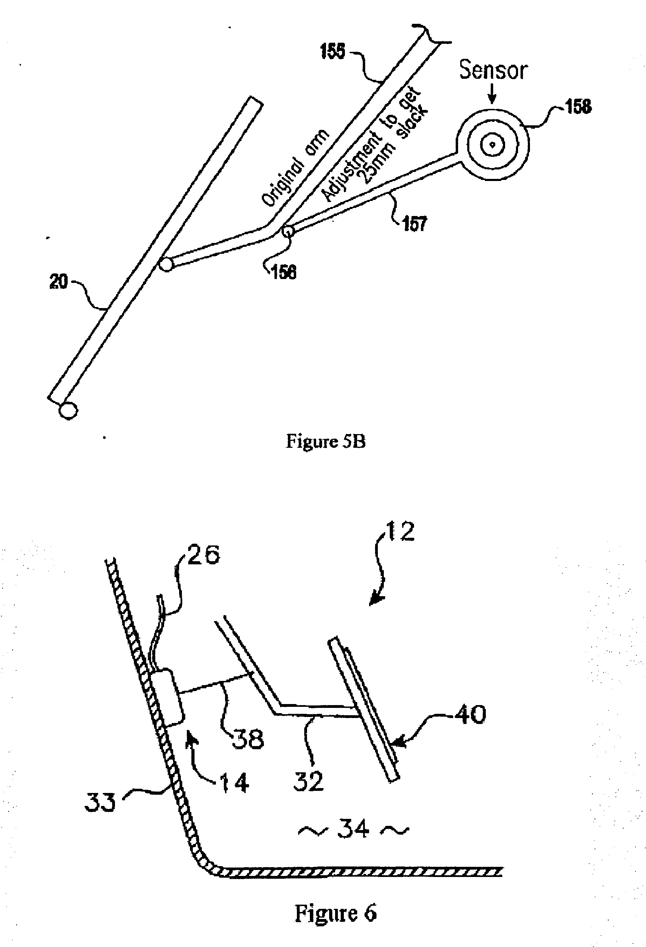

Referring to Figure 4, the sensor of auxiliary pedal 18 is in electronic communication with control module 14 via lead 26. As best seen in Figure 6, control module 14 is mounted rearward of arm 32 of brake pedal 12, either on the inside of the firewall 33 or foot well 34 where space permits, or in the engine bay on the outside of firewall 33. Control module 14 includes control and logic circuitry and a servomotor (not shown). The servomotor may take the form of a linear or rotary actuator which acts on a coupling 38 between the control module 14 and brake pedal arm 32. Coupling 38 is flexible, preferably a cable, so that the brake pedal 12 may be activated manually by pressure from the driver's foot regardless of the state of the actuator of control module 14.

In response to signals received from the sensor of auxiliary pedal 18 mounted at the accelerator pedal 10, the servomotor acts to vary the depression of brake pedal 12 from its first deactivated state as shown in Figure 6, to a maximum activated state, that is the state of depression commensurate with at least a percentage of maximum available braking force.

### Alternative arrangements for secondary reaction surface

With reference to Figures 5A and 5B there are illustrated alternative arrangements wherein the secondary reaction surface takes the form of a guide arm mechanically associated with a pivot which operates a sensor 150 preferably in the form of an angle transducer.

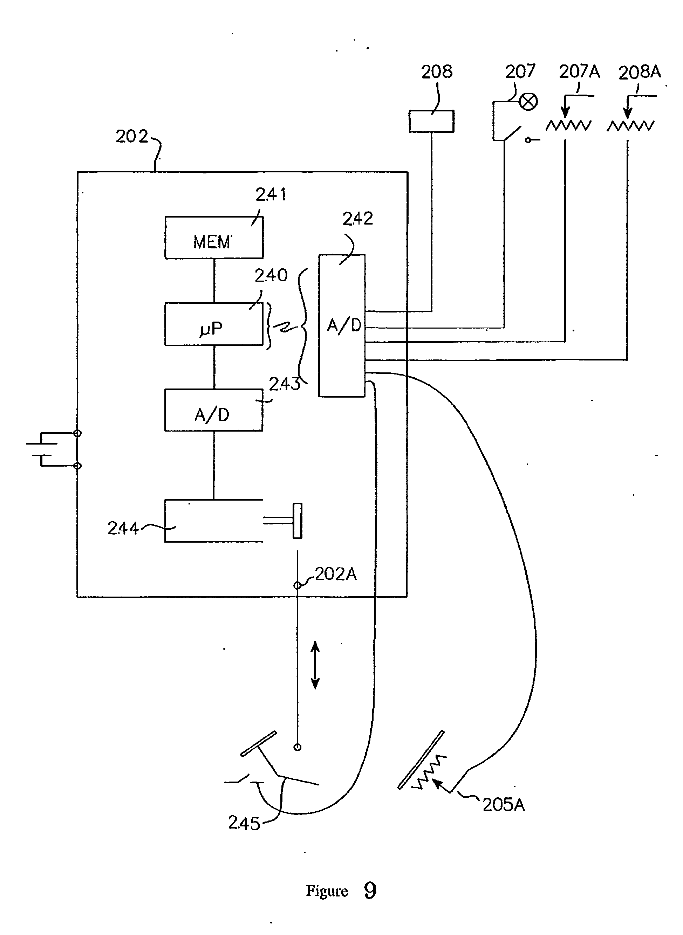

With reference to Figure 5A operation is such that depression of accelerator pedal 20 causes a top portion 151 of accelerator pedal 20 to press against a secondary reaction surface in the form of pivot arm extension surface 152 thereby to cause rotation of sensor arm 153 about pivot 154 which causes operation of an angle sensor (not shown). The angle sensor can be a potentiometer 205A as shown in Figure 9 thereby to impart a signal proportional to the angular position of pivot arm 153. This angular information is utilised by the control system in the manner previously described.

With reference to Figure 5B accelerator pedal 20 operates against arm 155 which, in turn, operates against secondary reaction surface 156 located on an extended portion of pivot arm 157 of angular sensor 158. Operation of the accelerator pedal 20 causes rotation of pivot arm 157 thereby to vary the angular position of angular sensor 158 thereby to impart an angle signal for use by the control system in the manner previously described.

It will be observed that in this particular arrangement of Figure 5A and Figure 5B the secondary reaction surface is located on an opposite side of pedal 20 to that of previous embodiments but nonetheless acts as a secondary reaction surface for the purpose of acting as a mechanical communicator of position of or force applied to accelerator pedal 20.

Referring again to Figure 6, brake pedal 12 is provided on its surface with a secondary reaction surface, in this instance a pressure sensitive pad 40, incorporating a switch (not shown). Immediately pressure is applied to the brake pedal via pad 40 by the foot of a driver, the switch disables control module 14, so that manual control of braking action is returned to the driver.

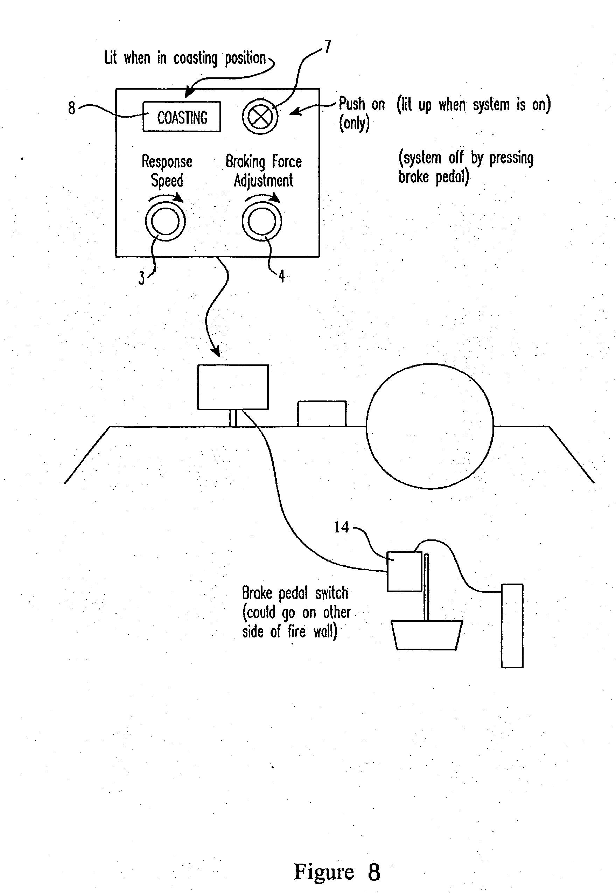

Referring to Figure 8, mounted within easy reach of the driver, preferably on the dashboard or, in a system fitted to a vehicle as original equipment, incorporated in the wiper or indicator stalks, is an enable control 7 for control module 14. The control can comprise an illuminated button which illuminates when and only when the system is on. By means of this control, a driver may select to operate the vehicle's braking system via the accelerator, or to retain normal manual control of the brake pedal.

Also mounted within easy reach of the driver are two dial controls, by which operating characteristics of the accelerator braking system of the invention may be modified to suit the preferences of a driver. The first of these controls 3 allows a driver to vary the rate at which the servo motor of the control module 14 responds to input signals received from the accelerator pedal's secondary reaction surface. The second control 4 allows the driver to select the percentage of the maximum available braking force of the vehicle as the maximum to be applied by the control module 14.

Preferably, the system is further provided with an indicator light 8 mounted in view of the driver which indicates when the secondary reaction surface and the accelerator pedal are in the neutral feel zone, that is to say, when a moving vehicle is coasting, with no acceleration applied to the engine or any retarding force applied by the brakes.

### In Use

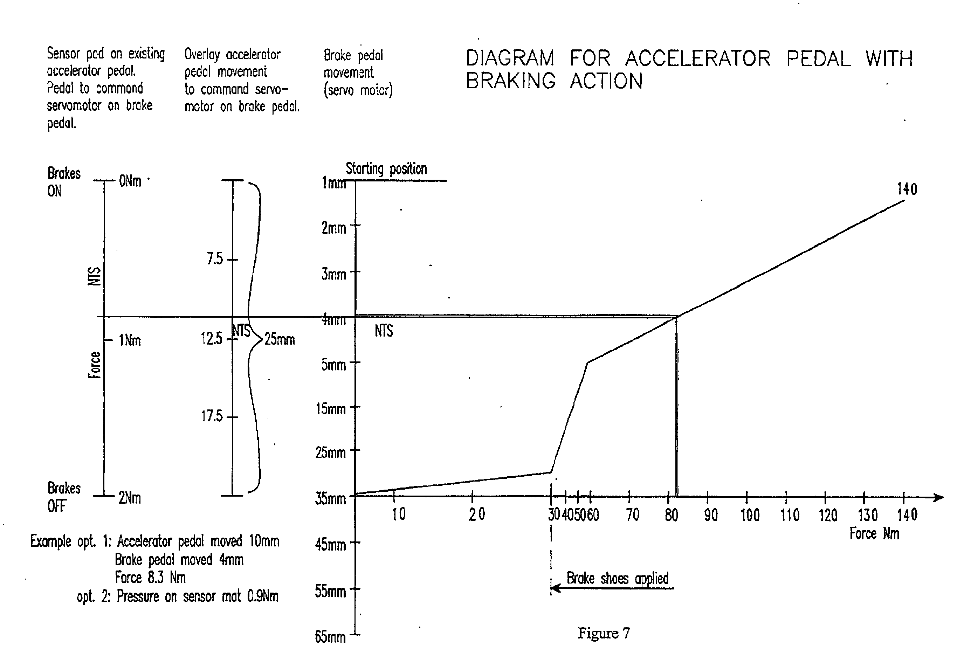

Figure 7 shows graphically an example of the interaction of the movement of auxiliary pedal 18, with the operation of the vehicle's brakes.

In this example, at vehicle start up, with the accelerator braking system of the invention enabled, the control module 14 holds the brake pedal 12 in a depressed state to exert a braking force of 140Nm (the maximum braking force selected by the driver). At this point, the auxiliary pedal 18 has not moved relative to the surface 22 accelerator pedal 20.

It can be seen from the graph that as pressure is applied to the secondary reaction surface of the accelerator pedal braking force decreases under the programmed control of the control module 14. Thus in the case of the auxiliary pedal 18, when, in this example, it has moved its full travel of approximately 25 mm, the brakes are fully off. In the example of Figure 7, a movement of 10mm of the auxiliary pedal 18, is translated by the control module 14 servo motor as 25mm of releasing movement of the brake pedal from its maximum braking state, with a concomitant reduction in the braking force to 83Nm.

Referring still to Figure 7, when the vehicle is in motion and the accelerator braking system is enabled, a driver may remove pressure on the secondary reaction surface (and thus on the accelerator pedal) to the point where the accelerator pedal is fully retracted from its depressed state. Further reduction of pressure then begins to reduce the depression of auxiliary pedal 18 from its maximum deflection of 25mm (or the reduction of pressure on pressure sensitive mat 32 from 20Nm). This causes the control module to gradually depress the brake pedal and apply a corresponding proportion of the maximum set braking force, bringing the vehicle to a braked standstill.

It will be clear that a sudden release of any pressure on the accelerator pedal and the secondary reaction surface will bring the maximum set braking force into play within the adjustable reaction time of the control module 14 and its actuator. This reaction time will be significantly shorter than the time it takes a driver to bring his leg and foot from the accelerator position to the brake pedal and depressing that pedal. Thus in an emergency, the initiation of considerable braking force can be applied more quickly, giving the driver time to then take over and apply manually (if required) the full braking force available from the vehicle's braking system.

As shown in Figure 7, in the event the driver takes their foot completely off the accelerator pedal from any position, the control module is programmed, on sensing the corresponding rate of movement of the accelerator pedal by the accelerator sensor to activate maximum braking power.

The advantage of the present system in a stop/start traffic situation, is that by simply manipulating the accelerator pedal, a driver may alternatively bring the vehicle into motion and to a braked standstill. This is particularly advantageous in an automatic vehicle in which typically creep, even with the accelerator pedal completely released, forces a driver to manually apply the brakes each time the vehicle needs to be brought to a standstill.

### "Factory fit" embodiment:

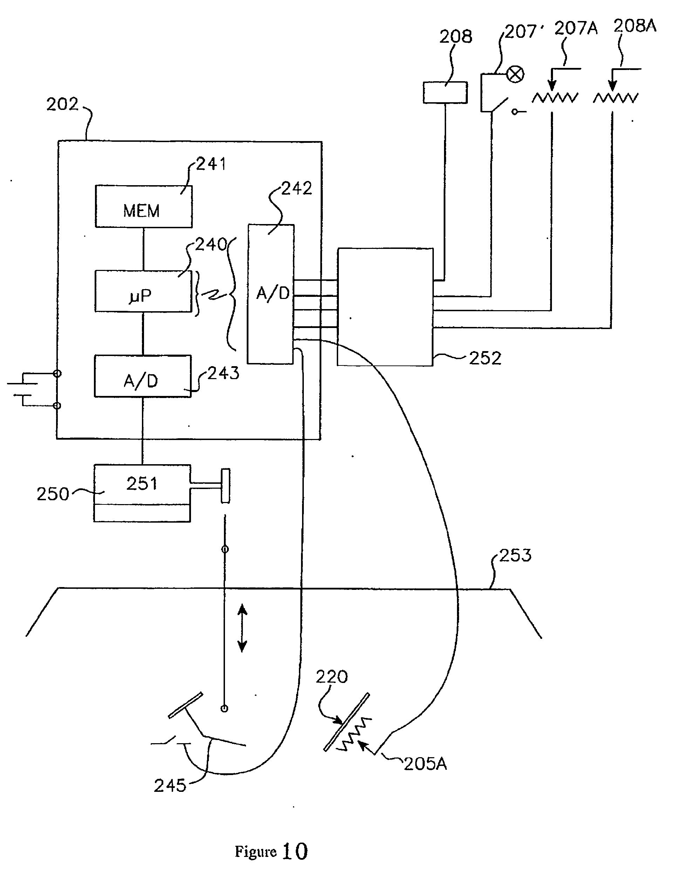

With reference to Figure 10 there is illustrated a further variation to the arrangement illustrated with respect to Figure 9 wherein advantage is taken of the digital electronic capability now pre-installed in vehicles at the factory.

Referring to both Figures 9 and 10 like components are numbered as for earlier embodiments except in the 200 series so, for example, dashboard mounted indicator light 8 becomes dash board mounted indicator light 208.

In this instance the majority of the functions of the control module previously described are incorporated into the vehicle's electronic control module 202. That is to say most vehicles these days incorporate a vehicle control system or engine management system which includes a microprocessor 240 memory 241 and A/D converters 243, 242. In particular accelerator pedal 220 has its position sensed by a potentiometer arrangement 205A or equivalent whereby a signal proportional to accelerator pedal position is passed either directly as a digital signal or via A/D converter 242 to microprocessor 240 within the vehicle electronic control module 202.

The vehicle electronic control module 202 controls many of the functions of the vehicle based on data it receives from various sensors including the accelerator position sensor just described. Most vehicles also include a master cylinder (which can be combined with a vacuum assist arrangement). The master cylinder 250 is mechanically linked to the brake pedal arm 245. A sensing arrangement 251 communicates brake fluid pressure data via analogue to digital converter 243 to microprocessor 240. In this embodiment an auxiliary control module 252 is in electronic communication with the vehicle control module 202 and also with ancillary components of the braking system of this embodiment including the sensor light 208 and other dashboard mounted components as illustrated in Fig 10.

With this fully electronic "factory fit" arrangement there is no need to install any components on the driver's side of fire wall 253 of the vehicle. In this arrangement advantage is taken of the existing sensing arrangements and data already supplied to the vehicle electronic controller 202.

In a particular form the microprocessor 240 can be programmed to include a modified characteristic as compared with the accelerator/ braking profile illustrated in fig 7. That is to say in a "hill assist" mode where the vehicle is caused to brake on a sloping surface the "neutral zone" behaviour characteristic is by-passed with the vehicle proceeding from braking mode direct to powered mode so that there is no roll back of the vehicle on the sloping surface.

The above describes only some embodiments of the present invention and modifications, obvious to those skilled in the art, can be made thereto without departing from the scope of the present invention.

## Claims

1. An accelerator braking system for a vehicle; said braking system reactive to forces applied to a secondary reaction surface (16) of an accelerator pedal (10) of said vehicle; said system **characterized by** a transmission to a control module (14) of data corresponding to said forces applied to said secondary reaction surface wherein braking force is gradually increased and decreased by operation of the accelerator pedal (10); said control module further including a servomotor installed rearward of an arm (32) of said brake pedal (12) and operatively coupled to said brake pedal (12); said servomotor acting to vary the depression of said brake pedal (12) commensurate with at least a percentage of maximum available braking force.

2. The accelerator braking system of claim 1 wherein said data comprises force data or angle data.

3. The accelerator braking system of claim 1 or 2 wherein said control module (14) includes a modified control characteristic which is applied when said vehicle is on a slope.

4. The accelerator braking system of claim 3 wherein said modified control characteristic operates in a "hill assist" mode whereby when said vehicle is caused to brake on a sloping surface a "neutral zone" behaviour characteristic is by-passed with the vehicle proceeding from braking mode direct to powered mode so that there is no roll back of the vehicle on the sloping surface as the vehicle accelerates from rest.

5. The accelerator braking system of any previous claim wherein said servomotor is connected to said arm (32) of said brake pedal (12) by means of a flexible coupling (38).

6. The accelerator braking system of any one of claims 1 to 5 wherein the secondary reaction surface (16) comprises a hinged auxiliary pedal (18) attached to said accelerator pedal (20); said hinged auxiliary pedal (18) arranged for movement from a first deactivate state to a second fully activated state by pressure applied by a foot of a driver.

7. The accelerator braking system of claim 6 wherein said hinged auxiliary pedal (18) includes a sensor in electronic communication with said control module.

8. The accelerator braking system of claim 7 wherein, in said fully activated state, additional pressure applied by said foot of said driver is transferred to said accelerator pedal so as to urge said accelerator pedal (20) into an activated position.

9. The accelerator braking system of any one of claims 6 to 8 wherein pressure applied by said foot of a driver to urge said secondary reaction surface (16) from said deactivated state to said fully activated state is less than pressure required to urge said accelerator pedal (14) from a deactivated state into a said activated position.

10. The accelerator braking system of claim 8 or 9 wherein transition from said fully activated state of said secondary reaction surface (16) to a said activated position of said accelerator pedal (20) includes a neutral feel zone perceptible to said driver.

11. The accelerator braking system of claim 10 wherein an indicator light (8) mounted in view of a said driver of said vehicle is activated when pressure applied to said accelerator pedal is in said neutral feel zone.

12. The accelerator braking system of any one of claims 6 to 11 wherein a transition from a said inactive state to a said fully activated state of said secondary reaction surface (16), is accompanied by a transition of said braking system from at least a percentage of full braking force to a zero braking force.

13. The accelerator braking system of any one of claims 1 to 12 wherein said accelerator braking system is enabled by a suitably mounted enable switch (7) within reach of a driver of said vehicle.

14. The accelerator braking system of any one of claims 1 to 13 wherein a sudden release of pressure on said accelerator pedal (20) and said secondary reaction surface (16) will bring a maximum set braking force into play.

15. The accelerator braking system of any one of claims 1 to 14 wherein said brake pedal is provided with a secondary reaction surface; said secondary reaction surface comprising a pressure sensitive pad incorporating a disable switch, whereby pressure applied to said secondary reaction surface operates said switch to deactivate said control module.

## Patentansprüche

1. Fahrpedal-Bremssystem für ein Fahrzeug; welches Bremssystem auf Kräfte reaktiv wirkt, die auf eine zweite Reaktionfläche (16) eines Fahrpedals (10) des Fahrzeugs aufgebracht werden; wobei das System durch eine Übertragung von Daten auf ein Steuermodul (14) entsprechend den Kräften gekennzeichnet ist, die auf die besagte zweite Reaktionsfläche übertragen werden, wobei die Bremskraft graduell erhöht und vermindert wird durch eine Betätigung des Fahrpedals (10); wobei das Steuermodul ferner einen Servomotor aufweist, der rückseitig an einem Arm (32) des Bremspedals (12) installiert ist und funktional an das Bremspedal (12) angekoppelt ist; wobei der Servomotor darauf einwirkt, das Absenken des Bremspedals (12) zu variieren, um zumindest angemessen einem bestimmten Prozentsatz einer maximal erreichbaren Bremskraft zu entsprechen.

2. Fahrpedal-Bremssystem nach Anspruch 1, wobei die Daten Kraftdaten oder Winkeldaten enthalten.

3. Fahrpedal-Bremssystem nach Anspruch 1 oder 2, wobei das Steuermodul (14) eine modifizierte Steuercharakteristik aufweist, die Anwendung findet, wenn sich das Fahrzeug auf einer Steigung befindet.

4. Fahrpedal-Bremssystem nach Anspruch 3, wobei die modifizierte Steuercharakteristik in einem "Berg-Unterstützungs"-Modus operiert, wobei eine "Neural-Zonen"-Verhaltenscharakteristik umgangen wird, wenn das Fahrzeug auf einer ansteigenden Fläche abgebremst wird, wobei das Fahrzeug aus einem Bremsmodus direkt in einen Antriebsmodus überführt wird, sodass das Fahrzeug auf der ansteigenden Fläche nicht zurückrollt, wenn das Fahrzeug aus seiner Ruhe beschleunigt wird.

5. Fahrpedal-Bremssystem nach einem der vorangehenden Ansprüche, wobei der Servomotor an besagten Arm (32) des Bremspedals (12) mit Hilfe einer flexiblen Kupplung (38) angekoppelt ist.

6. Fahrpedal-Bremssystem nach einem der Ansprüche 1 - 5, wobei die zweite Reaktionsfläche (16) ein angelenktes Hilfspedal (18) aufweist, das an dem Fahrpedal (20) befestigt ist; wobei das angelenkte Hilfspedal (18) für eine Bewegung aus einem ersten deaktivierten Zustand in einen zweiten vollständig aktivierten Zustand durch eine Druckausübung mittels eines Fußes des Fahrers vorgesehen ist.

7. Fahrpedal-Bremssystem nach Anspruch 6, wobei das angelenkte Hilfspedal (18) einen Sensor aufweist, der in elektronischer Kommunikation mit dem Steuermodul steht.

8. Fahrpedal-Bremssystem nach Anspruch 7, wobei in dem vollständig aktivierten Zustand die durch den Fuß des Fahrers aufgebrachte zusätzliche Druckkraft auf das Fahrpedal übertragen wird, um das Fahrpedal (20) in eine aktivierte Position zu drücken.

9. Fahrpedal-Bremssystem nach einem der Ansprüche 6 - 8, wobei die durch den Fuß eines Fahrers aufgebrachte Druckkraft zum Drücken der zweiten Reaktionsfläche (16) aus dem besagten deaktivierten Zustand in den besagten vollständig aktivierten Zustand kleiner ist als die Druckkraft, die zum Bewegen des Fahrpedals (14) aus einem deaktivierten Zustand in die aktivierte Position erforderlich ist.

10. Fahrpedal-Bremssystem nach Anspruch 8 oder 9, wobei der Übergang von dem vollständig aktivierten Zustand der zweiten Reaktionsfläche (16) in die aktivierte Position des Fahrpedals (20) eine neutrale Fühlzone beinhaltet, die der Fahrer erfühlen kann.

11. Fahrpedal-Bremssystem nach Anspruch 10, wobei ein Indikatorlicht (8), das im Blickfeld des Fahrers des Fahrzeugs montiert ist, aktiviert wird, wenn sich der auf das Fahrpedal aufgebrachte Druck in der neutralen Fühlzone befindet.

12. Fahrpedal-Bremssystem nach einem der Ansprüche 6 - 11, wobei ein Übergang von dem inaktivierten Zustand in den völlig aktivierten Zustand der zweiten Reaktionsfläche (16) von einem Übergang des Bremssystems begleitet ist, und zwar von zumindest einem Prozentsatz an vollständiger Bremskraft auf eine Null-Bremskraft.

13. Fahrpedal-Bremssystem nach einem der Ansprüche 1 - 12, wobei das Fahrpedal-Bremssystem durch einen geeignet montierten Aktivierungsschalter (7) innerhalb einer Reichweite des Fahrzeugfahrers einschaltbar ist.

14. Fahrpedal-Bremssystem nach einem der Ansprüche 1 - 13, wobei eine plötzliche Freigabe des Drucks auf das Fahrpedal (20) und die besagte zweite Reaktionsfläche (16) eine maximal gesetzte Bremskraft ins Spiel bringt.

15. Fahrpedal-Bremssystem nach einem der Ansprüche 1 - 14, wobei das Bremspedal mit einer zweiten Reaktionsfläche versehen ist; wobei die zweite Reaktionsfläche ein drucksensitives Pad aufweist, das einen Deaktivierungsschalter hat, wobei ein auf die zweite Reaktionsfläche aufgebrachter Druck den Schalter zum Deaktivieren des Steuermoduls betätigt.

## Revendications

1. Système de freinage d'accélérateur pour un véhicule ; ledit système de freinage étant réactif à des forces appliquées à une surface de réaction secondaire (16) d'une pédale d'accélérateur (10) dudit véhicule ; ledit système étant **caractérisé par** une transmission à un module de commande (14) de données correspondant auxdites forces appliquées à ladite surface de réaction secondaire, dans lequel une force de freinage est graduellement augmentée et réduite par opération de la pédale d'accélérateur (10) ; ledit module de commande incluant en outre un servomoteur installé en arrière d'un bras (32) de ladite pédale de frein (12) et couplé de manière opérationnelle à ladite pédale de frein (12) ; ledit servomoteur agissant pour faire varier l'enfoncement de ladite pédale de frein (12) proportionnellement à au moins un pourcentage de la force de freinage maximale disponible.

2. Système de freinage d'accélérateur selon la revendication 1, dans lequel lesdites données comprennent des données de force ou des données d'angle.

3. Système de freinage d'accélérateur selon la revendication 1 ou 2, dans lequel ledit module de commande (14) inclut une caractéristique de commande modifiée qui est appliquée lorsque ledit véhicule est sur une pente.

4. Système de freinage d'accélérateur selon la revendication 3, dans lequel ladite caractéristique de commande modifiée opère dans un mode "d'assistance en côte" en sorte que lorsque ledit véhicule est amené à freiner sur une surface en pente, une caractéristique de comportement en "zone neutre" est contournée avec le véhicule qui passe directement d'un mode de freinage à un mode entraîné de telle sorte qu'il n'y ait aucun recul du véhicule sur la surface en pente lorsque le véhicule accélère à partir de l'arrêt.

5. Système de freinage d'accélérateur selon l'une quelconque des revendications précédentes, dans lequel ledit servomoteur est relié audit bras (32) de ladite pédale de frein (12) au moyen d'un accouplement flexible (38).

6. Système de freinage d'accélérateur selon l'une quelconque des revendications 1 à 5, dans lequel la surface de réaction secondaire (16) comprend une pédale auxiliaire articulée (18) fixée à ladite pédale d'accélérateur (20) ; ladite pédale auxiliaire articulée (18) étant agencée pour un mouvement d'un premier état désactivé à un second état entièrement activé par une pression appliquée par un pied d'un conducteur.

7. Système de freinage d'accélérateur selon la revendication 6, dans lequel ladite pédale auxiliaire articulée (18) inclut un capteur en communication électronique avec ledit module de commande.

8. Système de freinage d'accélérateur selon la revendication 7, dans lequel, dans ledit état entièrement activé, une pression supplémentaire appliquée par ledit pied dudit conducteur est transférée à ladite pédale d'accélérateur de manière à pousser ladite pédale d'accélérateur (20) dans une position activée.

9. Système de freinage d'accélérateur selon l'une quelconque des revendications 6 à 8, dans lequel la pression appliquée par ledit pied d'un conducteur pour pousser ladite surface de réaction secondaire (16) dudit état désactivé audit état entièrement activé est inférieure à une pression requise pour pousser ladite pédale d'accélérateur (14) d'un état désactivé dans une dite position activée.

10. Système de freinage d'accélérateur selon la revendication 8 ou 9, dans lequel une transition dudit état entièrement activé de ladite surface de réaction secondaire (16) à une dite position activée de ladite pédale d'accélérateur (20) inclut une zone de sensation neutre perceptible par ledit conducteur.

11. Système de freinage d'accélérateur selon la revendication 10, dans lequel un voyant d'indication (8) monté à la vue d'un dit conducteur dudit véhicule est activé lorsque la pression appliquée à ladite pédale d'accélérateur est dans ladite zone de sensation neutre.

12. Système de freinage d'accélérateur selon l'une quelconque des revendications 6 à 11, dans lequel une transition d'un dit état inactif à un dit état entièrement activé de ladite surface de réaction secondaire (16) est accompagnée d'une transition dudit système de freinage d'au moins un pourcentage de force de freinage maximale à une force de freinage nulle.

13. Système de freinage d'accélérateur selon l'une quelconque des revendications 1 à 12, dans lequel ledit système de freinage d'accélérateur est activé par un commutateur d'activation monté de manière adaptée (7) à portée d'un conducteur dudit véhicule.

14. Système de freinage d'accélérateur selon l'une quelconque des revendications 1 à 13, dans lequel un relâchement soudain de la pression sur ladite pédale d'accélérateur (20) et ladite surface de réaction secondaire (16) mettra en jeu une force de freinage réglée maximale.

15. Système de freinage d'accélérateur selon l'une quelconque des revendications 1 à 14, dans lequel ladite pédale de frein est munie d'une surface de réaction secondaire ; ladite surface de réaction secondaire comprenant un patin sensible à une pression incorporant un commutateur de désactivation, en sorte qu'une pression appliquée à ladite surface de réaction secondaire actionne ledit commutateur pour désactiver ledit module de commande.
